# EUROPEAN PATENT APPLICATION

(11) **EP 2 765 526 A1**
(43) Date of publication of application: **13.08.2014**
(21) Application number: 14154051.8
(22) Date of filing: 05.02.2014
(51) Int. Cl.: G06F 17/30

(54) **Creating playlists**

(30) Priority: 11.02.2013 US 201313764391
(71) Applicant: Google Inc., Mountain View, CA 94043 (US)
(72) Inventor: Bilinski, Brandon, Mountain View, CA 94043 (US); Otto, Owen Daniel, Mountain View, CA 94043 (US)
(74) Representative: Diehl & Partner GbR

(57) **Abstract**

A method for automatic selection of songs for consumption in a music library may include assigning a selection score for each of a plurality of songs in the music library based on at least one selection criteria. A first list of songs may be generated from the plurality of songs. The selection score for each of the songs in the first list may be higher than a determined threshold value. A similarity score may be generated for each of the songs in the first list. The similarity score for a corresponding song in the first list may be based on a first number of songs selected from the plurality of songs, and the first number of songs may be similar to the corresponding song. The songs in the first list may be ranked based on a highest similarity score.

## Description

### TECHNICAL FIELD

Aspects of the present application relate generally to the field of processing digital media content. More specifically, certain implementations of the present disclosure relate to systems and/or methods for automatically generating music playlists based on an implicitly selected seed.

### BACKGROUND

When a user opens up a music library (e.g., user's own music collection or a music library of a streaming music service), it is often difficult to decide which song to play. Users frequently want to quickly start playing an enjoyable mix of music with a minimum of effort spent selecting what to play. There are existing solutions for automatically creating a playlist based on a user selected seed song, from which similar songs are chosen by a music-management system in order to populate the playlist.

However, with the continuously growing personal music libraries, the manual selection of seed songs still requires a fair amount of user effort and time to navigate through their music collection and select an appropriate seed song. Users end up spending a significant amount of time viewing (paging through) the music library and deciding what to play. Additionally, even if a user hits "Play" to start playing a randomly selected item from his/her library, the user may not be in the mood to listen to the particular song at that particular time.

Further limitations and disadvantages of conventional and traditional approaches will become apparent to one of skill in the art, through comparison of such approaches with some aspects of the present method and apparatus set forth in the remainder of this disclosure with reference to the drawings.

### BRIEF SUMMARY

A system and/or method is provided for generating automatic seedless playlists with the ability to switch to a dissimilar path, substantially as shown in and/or described in connection with at least one of the figures, as set forth more completely in the claims.

In accordance with an embodiment of the disclosure, a method for automatic selection of songs for consumption in a music library may include assigning a selection score for each of a plurality of songs in the music library based on at least one selection criteria. A first list of songs may be generated from the plurality of songs. The selection score for each of the songs in the first list may be higher than a determined threshold value. A similarity score may be generated for each of the songs in the first list. The similarity score for a corresponding song in the first list may be based on a first number of songs selected from the plurality of songs, and the first number of songs may be similar to the corresponding song. The songs in the first list may be ranked based on a highest similarity score. A second list of songs from the plurality of songs may be generated for consumption by a user, using a top-ranked song from the first list of songs and an additional second number of songs selected from the plurality of songs. The second number of songs may be similar to the top-ranked song from the first list. The first number of songs and the second number of songs may be integers greater than one.

These and other advantages, aspects and features of the present disclosure, as well as details of illustrated implementation(s) thereof, will be more fully understood from the following description and drawings.

### BRIEF DESCRIPTION OF SEVERAL VIEWS OF THE DRAWINGS

FIG. 1 is a block diagram illustrating example architecture for generating automatic seedless playlists with the ability to switch to a dissimilar path, in accordance with an example embodiment of the disclosure.
FIGS. 2A-2B illustrate a more detailed block diagram of the example architecture of FIG. 1 for generating automatic seedless playlists with the ability to switch to a dissimilar path, in accordance with an example embodiment of the disclosure.
FIG. 3A illustrates an example user interface (UI) for selecting an instant mix of songs using automatic seedless playlists, in accordance with an example embodiment of the disclosure.
FIG. 3B illustrates an example user interface (UI) for selecting an instant mix of songs using automatic seedless playlists with the ability to switch to a dissimilar path, in accordance with an example embodiment of the disclosure.
FIG. 4 is a flow chart illustrating example steps of a method for automatic selection of songs for consumption in a music library, in accordance with an example embodiment of the disclosure.
FIG. 5 is a flow chart illustrating example steps of a method for automatic selection of additional songs after an initial song selection has been played back, in accordance with an example embodiment of the disclosure.
FIG. 6 is a flow chart illustrating example steps of another method for automatic selection of songs for consumption in a music library, in accordance with an example embodiment of the disclosure.

### DETAILED DESCRIPTION

As utilized herein the terms "circuits" and "circuitry" refer to physical electronic components (i.e. hardware) and any software and/or firmware ("code") which may configure the hardware, be executed by the hardware, and or otherwise be associated with the hardware. As utilized herein, "and/or" means any one or more of the items in the list joined by "and/or". As an example, "x and/or y" means any element of the three-element set {(x), (y), (x, y)}. As another example, "x, y, and/or z" means any element of the seven-element set {(x), (y), (z), (x, y), (x, z), (y, z), (x, y, z)}. As utilized herein, the term "e.g.," introduces a list of one or more non-limiting examples, instances, or illustrations.

As used herein the terms "media", "digital media" or "digital media item" may include any discrete media object, such as streaming media, audio files (e.g., songs), video files, games, slide shows, camera captures, and the like. Such digital media may be played back, displayed, or otherwise rendered for a user to consume the digital media. Even though various embodiments are described herein below in terms of audio tracks (or songs), the present disclosure is not limited in this regard, and other types of digital media may be used as well.

The present disclosure relates to a method and system for generating automatic seedless playlists with the ability to switch to a dissimilar path. In various implementations, to facilitate the selection of songs to play, an instant non-stop mix of songs may be created from a user's media library, based on recent user activity. In this regard, by activating the instant non-stop mix of songs, the user will hear thematically/sonically similar music that they enjoy without providing any input.

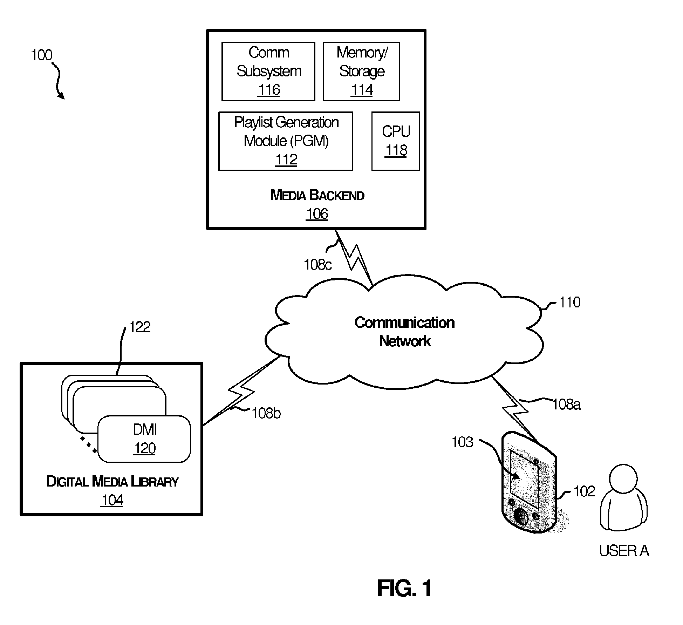

FIG. 1 is a block diagram illustrating example architecture for generating automatic seedless playlists with the ability to switch to a dissimilar path, in accordance with an example embodiment of the disclosure. Referring to FIG. 1, the example architecture 100 may comprise a client device 102 of a user (e.g., User A), a digital media library 104, and. a media backend 106.

The client device 102 may comprise suitable circuitry, logic and/or code and may be operable to communicate with the media backend 106 and/or the digital media library 104 to receive one or more digital media items, which may be organized in automatically generated playlists with the ability to switch to a dissimilar path. Additionally, the client device 102 may be operable to render or format the received one or more digital media items for consumption by User A. For example, if the digital media item comprises a music file (e.g., a song), the client device 102 may receive and display an automatically generated playlist associated with the music file on the device display 103. The client device may also play the received music file for user A using device speakers or external speakers. The client device 102 may comprise a handheld computing device (e.g., a cell phone, a smart phone, a personal data assistant (PDA), a tablet), a set-top box device, a laptop computer or another computing device.

Furthermore, the client device 102 may also include one or more transceivers for providing wired and/or wireless communication of data via the communication links 108a - 108c. In this regard, the communication links 108a - 108c may comprise one or more wired and/or wireless communication links used to communicate data via the communication network 110.

The communication network 1110 may comprise the Internet as well as any combination of wired and/or wireless networks, such as a Wi-Fi network, a WiMAX network (or another 802.1x enabled network), a satellite network, or a cellular telephone network.

The media backend 106 may comprise suitable circuitry, logic and/or code and may be operable to provide digital media related services to the client device 102. For example, the media backend 106 may provide digital media storage and management services, subscription services (e.g., streaming media subscription services), and digital media provisioning services (e.g., automatically generating playlists from a digital media library with the ability to switch to a dissimilar path, as well as sale, transcoding and/or download of digital media). The media backend 106 may also comprise memory/storage 114, a communication subsystem 116, a playlist generation module (PGM) 112, and a central processing unit (CPU) 118. Additionally, the media backend 106 may operate as, for example, a streaming content provider and may be operable to keep track of each digital media item that a user (e.g., user A) has viewed or listened to. In this regard, the media backend may store a play or view count of digital media items in the memory/storage block 114, as well as metadata information associated with digital media items from the digital media library 108 (e.g., rating, frequency of play, date of purchase/download or other metadata indicating user affinity to a specific digital media item).

Even though the media backend 106 is illustrated as being separate from the user device 102, the disclosure may not be limited in this regard. More specifically, the media backend 106 may be implemented as part of the user device 102 or another computing device.

The communication subsystem 116 may comprise suitable circuitry, logic, and/or code and may be operable to provide communication of information to and from the digital media library 104 and/or the client device 102. For example, the communication subsystem 116 may include one or more transceivers for providing wired and/or wireless communication of data to and from the digital media library 104 and/or the client device 102 via the communication network 110 and the communication links 108a - 108c.

The playlist generation module (PGM) 112 may comprise suitable circuitry, logic and/or code and may be operable to generate automatic seedless playlists with the ability to switch to a dissimilar path, using digital media items selected from the digital media library 104. The playlists may be communicated to the user device 102 for display on the screen 103 and consumption of the corresponding digital media in the playlist by user A using device speakers and/or external speakers.

The digital media library 104 may comprise suitable circuitry, logic and/or code and may be operable to manage a plurality of digital media items (DMis) 120, ..., 122. The plurality of DMIs 120, ..., 122 may comprise a plurality of songs forming a personal music library of user A. Even though the digital media library 104 is illustrated as being separate from the media backend 106, the disclosure may not be limited in this regard. More specifically, the digital media library 104 may be implemented as part of the media backend 106 or the user device 102.

In operation, user A may use the client device 102 to subscribe to a digital media provisioning and management service provided by the media backend 106. As part of the digital media provisioning and management service, user A may purchase, download, store, organize and generally have access to a plurality of digital media items 120, ..., 122 stored in the digital media library 104. For example, user A may have access to digital media items 120, ..., 122, which may comprise one or more streaming videos, songs or other types of digital media items. Additionally, user A may have previously purchased (or downloaded) the digital media items 120, ..., 122, and may download (and store) any of the digital media items 120, ..., 122 locally at the client device 102, or at a cloud-based digital media locker service (e.g., media locker service managed by the media backend 106 with media items being stored in storage 114 or another cloud-based storage location accessible within the architecture 100)..

Additionally, as part of the digital media related services provided by the media backend 106, the PGM 112 may be operable to generate automatic seedless playlists with the ability to switch to a dissimilar path. Such automatic seedless playlists generation may be activated by a user and may be used to create a non-stop instant mix of, e.g., audio tracks for listening by the user at client device 102. In this regard, the automatically generated seedless playlists may be communicated to the user device 102 and may be automatically displayed on the screen 103 as soon as the user device 102 is turned ON or user A accesses digital media management functionalities provided by the media backend 106 and selects a user interface for providing non-stop instant mix of audio tracks (e.g., user A accesses a music or other digital media online store or digital media collection management functionalities related to user A's digital media collection of items 120, ..., 122).

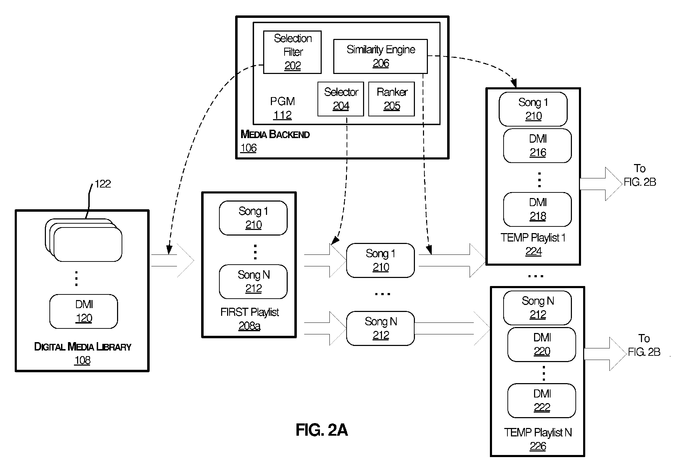

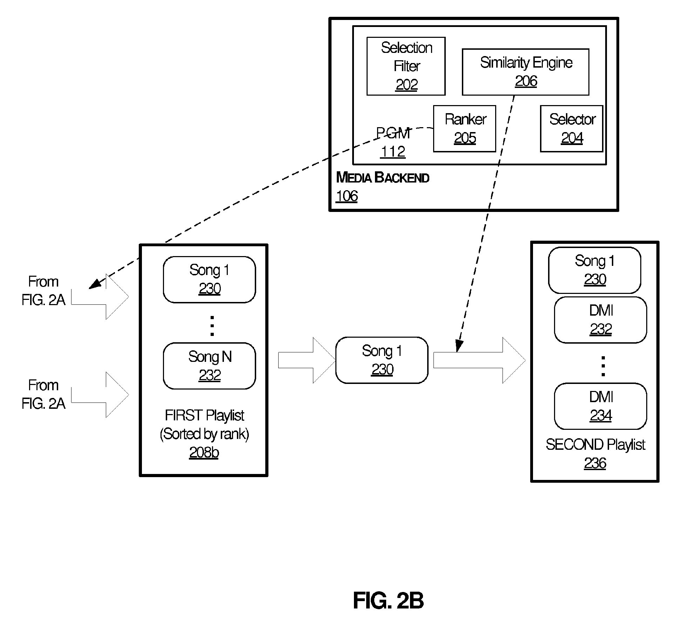

FIGS. 2A-2B illustrate a more detailed block diagram of the example architecture of FIG. 1 for generating automatic seedless playlists with the ability to switch to a dissimilar path, in accordance with an example embodiment of the disclosure.

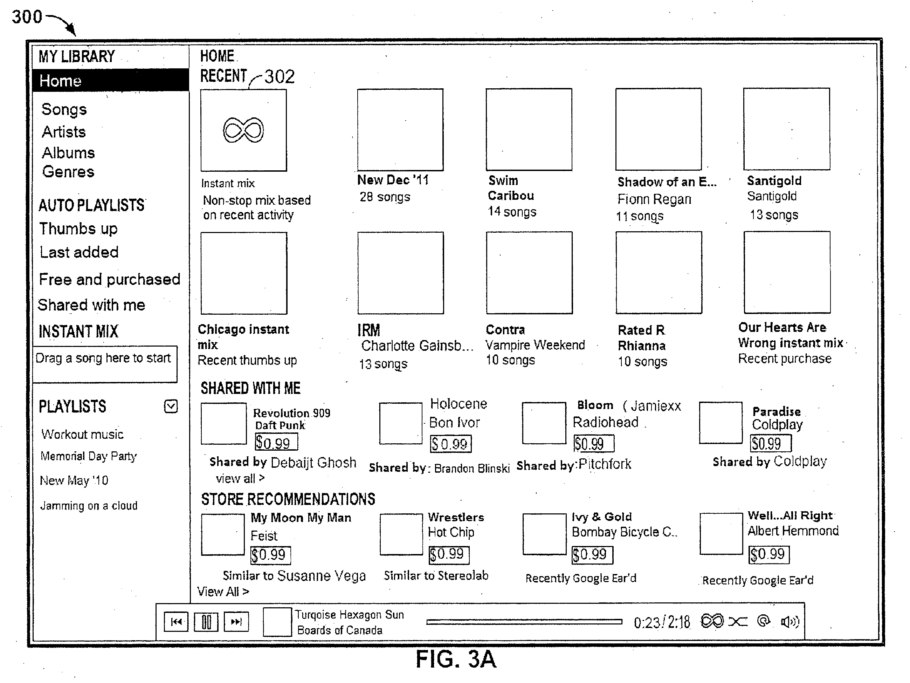

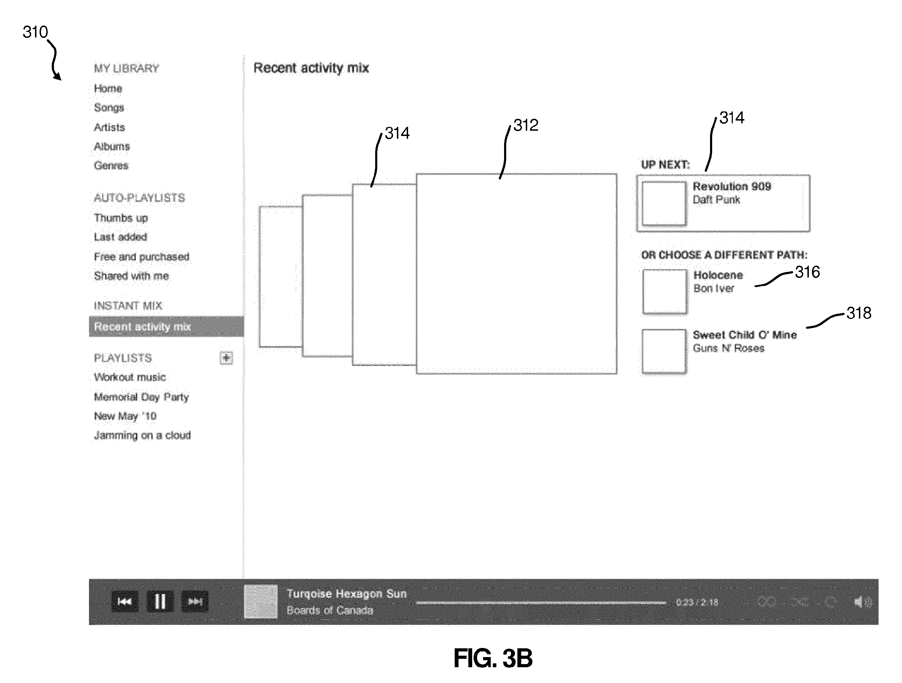

FIG. 3A illustrates an example user interface (UI) for selecting an instant mix of songs using automatic seedless playlists, in accordance with an example embodiment of the disclosure. FIG. 3B illustrates an example user interface (UI) for selecting an instant mix of songs using automatic seedless playlists with the ability to switch to a dissimilar path, in accordance with an example embodiment of the disclosure.

Referring to FIGS. 2A-2B, there is illustrated an example process of automatic generation of seedless music playlists by the PGM 112, based on recent user activity associated with the user's media library (e.g., DMIs 120, ..., 122).

The PGM 112 may comprise a selection filter 202, a selector 204, a ranker 205, and a similarity engine 206, which may be used during the automatic generation of seedless playlists. More specifically, the selection filter 202 may comprise suitable circuitry, logic and/or code and may be operable to filter (select) a plurality of DMIs based on one or more filtering parameters or criteria. For example, the selection filter 202 may be operable to run periodically in the background (e.g., every X intervals of time) to determine the user's favorite or newest tracks in their digital media library collection (e.g., DMIs 120, ..., 122). In this regard, the selection filter 202 may create (generate) a score for each DMI in the user's collection, based on the selection parameters (or criteria). Some example selection parameters (or criteria) may include: most played; highest rated; recently purchased or uploaded; recently rated high (thumbs upped, five-starred) by the user; recently rated high (thumbs upped, five-starred) by friends of the user in the user's social network; most played in the past 2 weeks (or in the past D number of days); and/or DMIs that are popular among users in the same social graph or demographics.

The selector module 204 may comprise suitable circuitry, logic and/or code and may be operable to perform a selection of one or more songs from a playlist generated by the selection filter 202. For example, the selector module 204 may be operable to perform a random (or sequential) selection of one or more songs from a playlist.

The ranker 205 may comprise suitable circuitry, logic and/or code and may be operable to rank a plurality of DMIs (e.g., songs in a playlist) according to specific criteria. For example, the ranker 205 may be operable to rank a plurality of songs based on, e.g., a similarity score associated with each song.

The similarity engine 206 may comprise suitable circuitry, logic and/or code and may be operable to generate a playlist based on a seed song or metadata from the seed song. More specifically, after receiving a seed song (or metadata from the seed song), the similarity engine 206 may function as a recommendation engine to recommend (or generate) a playlist with a determined number of songs selected from, for example, the DMIs 120, ..., 122 in the digital media library 108. The determined number of songs may be selected based on similarity to the received seed song. Various techniques may be used in selecting songs similar to the seed song, such as acoustic similarity, genre (or theme) similarity, artist similarity, as well as other techniques.

Additionally, the similarity engine may be operable to calculate a similarity score for a given song. For example, after receiving a song from the media library, the similarity engine may generate a temporary playlist with a determined number of songs that are similar to the received song. The similarity engine may then calculate a similarity score for the received song based on how similar each of the songs in the temporary playlist is to the received song. The determined similarity score may be used by, e.g., the ranker 205, to rank songs in a playlist.

Even though the selection filter 202, the selector module 204, the ranker 205, and the similarity engine 206 are illustrated as implemented within the media backend 106, the present disclosure may not be limited in this regard. More specifically, the seed filter 202, the selector module 204 and the similarity engine 206 may be implemented as separate functional modules or as part of other network device(s) within the architecture 100.

In operation, a user may be presented with a user interface (e.g., as illustrated in FIG. 3A), which may include an "instant mix" functionality 302. After the user activates the instant mix functionality 302, the selection filter 202 may apply one or more selection parameters or criteria (e.g., most played songs, or newest songs) to DMIs 120, ..., 122 in user's media library. As a result, the PGM 112 may generate a first playlist of songs 210, ..., 212, which cross a certain threshold associated with the selection criteria (e.g., songs played at least 10 times in the last week, songs purchased/downloaded no more than 1 month ago, etc.).

The selector module 204 may select each of the songs 210, ..., 212, which may be checked against the similarity engine 206 to see which songs from the playlist 208a generate good instant mixes. For example, for a given song (e.g., 210) in the first playlist 208a, the similarity engine 206 may locate Y number of similar tracks (DMIs 216, ..., 218), creating a temporary playlist 224. The similar songs 216, ..., 218 may then be scored based on how similar they are to the seed (210). The similarity scores for DMIs 216, ..., 218 may be added up, generating a total similarity score for song 210. The same process is repeated for the remaining songs in the first playlist 208a, yielding temporary playlists 224, ..., 226, which are used to calculate the total similarity score for each song 210, ..., 212 in the first playlist 208a. The ranker 205 may then rank the songs 210, ..., 212 in the first playlist 208a based on each song's similarity score, generating a ranked version 208b of the first playlist, with songs 230, ..., 232 (e.g., songs 230, ..., 232 are the same as 210, ..., 212, except 230, ..., 232 are ranked based on similarity score; e.g., song 230 may have the highest or lowest similarity score).

When the user selects the instant mix functionality 302, the selector 204 may select one of the top songs from the playlist 208b (e.g., song 230) as the seed. The similarity engine 206 may then generate the second playlist 236 with Z number of songs, including the seed 230 and songs 232, ..., 234 that are similar to the seed 230. The user may then be taken to the instant playlist screen 310, as illustrated in FIG. 3B.

Referring to FIG. 3B, the playlist screen 310 may include a representation 312 of the currently played song, as well as representations 314 of the next song in the second playlist 236. In instances when the user keeps listening to the songs in the playlist 236, as the user nears the Zth song in the playlist (e.g., the last song 234), additional Z number of tracks may be added to the playlist 236. In order to add more songs, the media backend 106 may check the similarity scores of the next Z tracks (e.g., the next Z number of tracks in the playlist 236, which the similarity engine 206 returns as being similar to song 230). The similarity engine 206 may then calculate a similarity score for each of the additional Z tracks. If the similarity scores are above a certain threshold, the additional Z tracks may be added to the playlist 236 and playback may continue with the additional Z tracks after track 234. However, if the similarity scores are below the threshold, then the similarity engine 206 may return Z number of tracks that are similar to the last song (234) in the second playlist 236. In this regard, the playlist 236 may drift from its original seed, but since the user did not originally select a seed (i.e., automatic seedless playlist generation), such deviation in the playlist 236 may seem slight and may remain unnoticed by the user.

In accordance with an example embodiment of the disclosure, when the initial seed (e.g., song 230) is selected (of which the user may not be aware), the PGM 112 may also look for two or more of the user's top songs (e.g., two or more of the songs in the playlist 208b), which may be dissimilar from the selected seed (230) (e.g., the similarity scores for the dissimilar songs and the selected seed song may be very distant in the vector space based on acoustic modeling). These two (dissimilar) seeds may be offered to the user (e.g., selections 316, 318 in FIG. 3B) in case the path that was automatically selected (i.e., the songs in playlist 236) was not what the user was in the mood for. If at any time the user chooses an alternate path (e.g., by selecting songs 316 or 318), an instant mix of Z songs may be created based on that seed, and the user may then be offered two more dissimilar seeds in case they would like to change paths again.

In some instances, the two (dissimilar) seeds 316 and 318 may be selected based on dissimilarity with the currently playing song (rather than based on dissimilarity with the main seed 230). In this regard, each time a new song is played from the playlist 236, the dissimilar song paths (e.g., songs 316, 318) will change based on the currently playing song.

For example, the user may select instant mix functionality 302 to hear an automatic playlist, and one of the top songs may be Metallica - Ride the Lightning. A playlist (e.g., 236) of 80s thrash metal songs similar to Metallica may be generated. In the playlist screen 310, two other top-rated (but dissimilar) songs 316, 318 may be displayed, one of which may be Kanye West - Monster and the other may be Bon lver - Holocene. All three tracks are songs the user enjoys, but if they are not in the mood for 80s thrash, they can click on the Kanye West song and hear an instant mix based around Kanye West.

In reference to the generation of a potential list of seeds (e.g., playlists 208a and 208b) that would be used when the user selects the infinity mix functionality 302, once the PGM 112 has created the playlist with potential seeds (e.g., playlists 208a or 208b), the PGM 112 may weigh certain seed songs more heavily if the songs are similar to what the user has played recently. For example, if the user loves rock and hip-hop, but has only listened to hip-hop in the past week, the PGM 112 may automatically choose a hip-hop song as a seed (e.g., song 230) to ensure that the automatic playlist that is created (e.g., 208b) is more relevant to the user.

In reference to the playlist screen 310 (FIG. 3B), the different path selections 316, 318 may show not only a single selection but several subsequent selections as well, so the user can see that if they switch to one of the different paths (e.g., 316), which artists/songs will be subsequently played. Furthermore, additional information on the "different" paths may be provided with the selections 316, 318 (e.g., what genre the path is, what BPM it is on average for the upcoming songs in that path, what artists show up the most in it, etc.).

In some instances when the user selects a different path (e.g., 316 or 318), the media backend 106 may gradually steer the playback selection to the new (different) path. For example, if the user currently listens to songs in genre A and the user selects a different playlist path (e.g., selection 316, which is in genre B), the media backend may initially play songs that are similar to both genres A and B, and then switch to songs similar to genre B songs only.

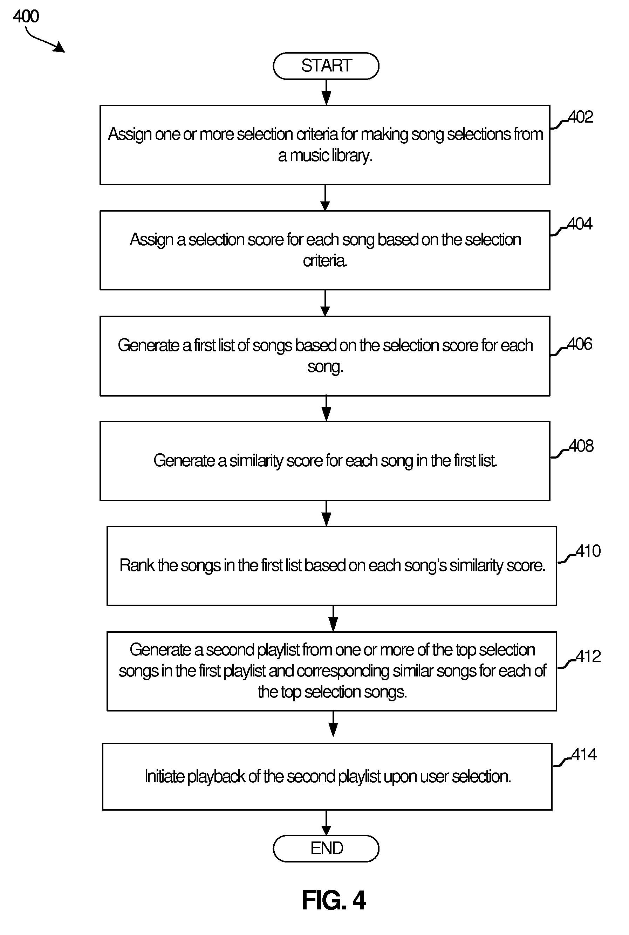

FIG. 4 is a flow chart illustrating example steps of a method for automatic selection of songs for consumption in a music library, in accordance with an example embodiment of the disclosure. Referring to FIG. 4, the example method 400 may start at 402, one or more selection criteria (e.g., used by the selection filter 202) may be assigned for making song selections from a music library (e.g., DMIs 120, ..., 122). At 404, the selection filter 202 may assign a selection score for each song (120, ..., 122) based on the selection criteria. At 406, a first list of songs (playlist 208a) may be generated based on the selection score for each song. At 408, the similarity engine 206 may generate a similarity score for each song in the first list (208a). At 410, the songs in the playlist 208a may be ranked based on each song's similarity score. At 412, the PGM 112 may generate a second playlist (408b) from one or more of the top selection songs in the first playlist (408a) and corresponding similar songs for each of the top selection songs. At 414, playback of the second playlist (408b) may be initiated upon user selection of the instant mix functionality 302.

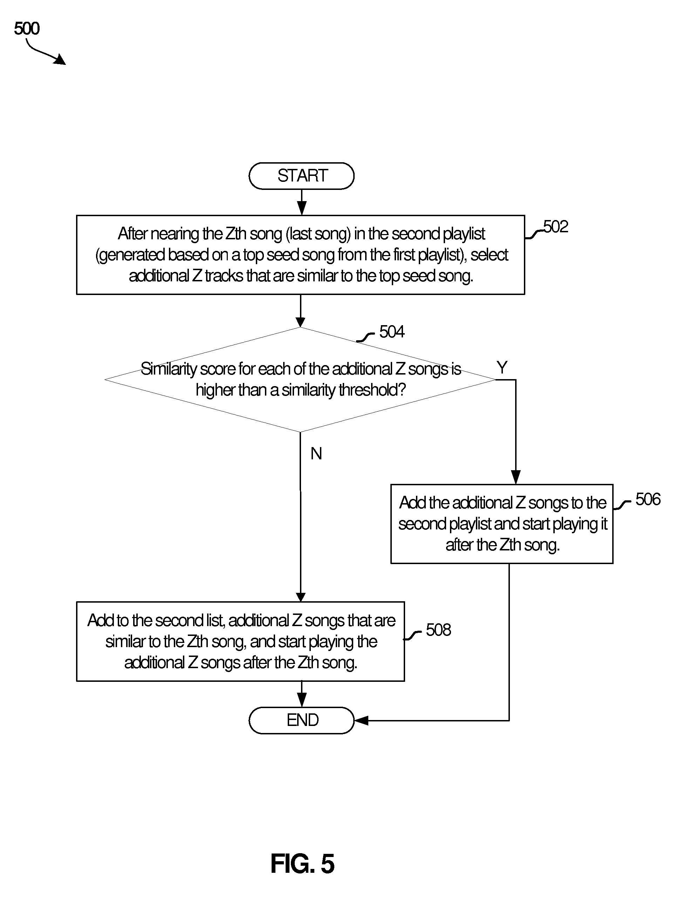

FIG. 5 is a flow chart illustrating example steps of a method for automatic selection of additional songs after an initial song selection has been played back, in accordance with an example embodiment of the disclosure. Referring to FIG. 5, the example method 500 may start at 502, when after nearing the Zth song (last song) in the second playlist (e.g., playlist 236, generated based on a top seed song 230 from the first playlist 208b), additional Z tracks that are similar to the top seed song may be selected (e.g., from the user's media library of DMIs 120, ..., 122). At 504, it may be determined whether similarity score for each of the additional Z songs is higher than a similarity threshold. If the similarity score is higher than the threshold, at 506, the additional Z songs may be added to the second playlist 236 for playback after the Zth song. If the similarity score is not higher than the threshold, at 508, additional Z songs that are similar to the Zth song may be added to the second playlist 236 for subsequent playback after the Zth song.

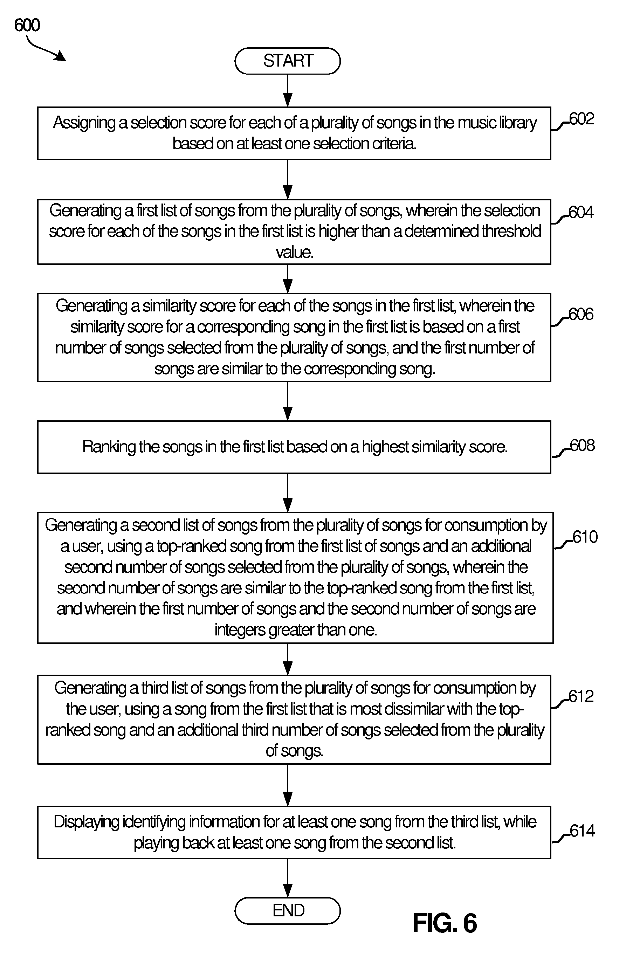

FIG. 6 is a flow chart illustrating example steps of another method for automatic selection of songs for consumption in a music library, in accordance with an example embodiment of the disclosure. Referring to FIG. 6, the example method 600 may start at 620, when a selection score may be assigned (e.g., by the selection filter 202) for each of a plurality of songs in the music library (e.g., 120, ..., 122) based on at least one selection criteria. At 604, a first playlist (e.g., 208a) may be generated from the plurality of songs, where the selection score for each of the songs in the first list 208a is higher than a determined threshold value.

At 606, the similarity engine 206 may generate a similarity score for each of the songs in the first list 208a. The similarity score for a corresponding song in the first list 208a (e.g., 210 or 212) may be based on a first number of songs (e.g., 216, ..., 218 or 220, ..., 222) selected from the plurality of songs (120, ..., 122), and the first number of songs are similar to the corresponding song. At 608, the ranker 205 may rank the songs in the first list 208a based on a highest similarity score, generating a ranked first playlist 208b. At 610, a second list of songs (236) may be generated from the plurality of songs for consumption by a user, using a top-ranked song (e.g., 230) from the first list of songs (208b) and an additional second number of songs (232, ..., 234) selected from the plurality of songs. The second number of songs (232, ..., 234) may be similar to the top-ranked song (230) from the first list. The first number of songs and the second number of songs may be integers greater than one.

At 612, a third list of songs may be generated from the plurality of songs for consumption by the user, using a song (e.g., 316) from the first list that is most dissimilar with the top-ranked song (230) and an additional third number of songs selected from the plurality of songs (e.g., songs similar to 316). At 614, identifying information for at least one song from the third list may be displayed (e.g., instant playlist screen 310), while playing back at least one song from the second list (312).

Other implementations may provide a non-transitory computer readable medium and/or storage medium, and/or a non-transitory machine readable medium and/or storage medium, having stored thereon, a machine code and/or a computer program having at least one code section executable by a machine and/or a computer, thereby causing the machine and/or computer to perform the steps as described herein for automatic selection of songs for consumption in a music library.

Accordingly, the present method and/or system may be realized in hardware, software, or a combination of hardware and software. The present method and/or system may be realized in a centralized fashion in at least one computer system, or in a distributed fashion where different elements are spread across several interconnected computer systems. Any kind of computer system or other system adapted for carrying out the methods described herein is suited. A typical combination of hardware and software may be a general-purpose computer system with a computer program that, when being loaded and executed, controls the computer system such that it carries out the methods described herein.

The present method and/or system may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present method and/or apparatus has been described with reference to certain implementations, it will be understood by those skilled in the art that various changes may be made and equivalents may be substituted without departing from the scope of the present method and/or apparatus. In addition, many modifications may be made to adapt a particular situation or material to the teachings of the present disclosure without departing from its scope. Therefore, it is intended that the present method and/or apparatus not be limited to the particular implementations disclosed, but that the present method and/or apparatus will include all implementations falling within the scope of the appended claims.

## Claims

1. A method for automatic selection of songs for consumption in a music library, the method comprising:
assigning a selection score for each of a plurality of songs in the music library based on at least one selection criteria;
generating a first list of songs from the plurality of songs, wherein the selection score for each of the songs in the first list is higher than a determined threshold value;
generating a similarity score for each of the songs in the first list, wherein the similarity score for a corresponding song in the first list is based on a first number of songs selected from the plurality of songs, and the first number of songs are similar to the corresponding song;
ranking the songs in the first list based on a highest similarity score; and
generating a second list of songs from the plurality of songs for consumption by a user, using a top-ranked song from the first list of songs and an additional second number of songs selected from the plurality of songs, wherein the second number of songs are similar to the top-ranked song from the first list, and wherein the first number of songs and the second number of songs are integers greater than one.

2. The method according to claim 1, wherein the assigning of the selection score is performed periodically, without user intervention.

3. The method according to claim 1 or 2, comprising:
initiating an automatic playback of the songs in the second list, starting with the top-ranked song.

4. The method according to claim 3, comprising:
displaying, during the playback, identifying information for the song that is currently being played back.

5. The method according to claim 3 or 4, comprising:
displaying, during the playback, identifying information for an upcoming song from the second list.

6. The method according to one of claims 1 to 5, comprising:
generating a third list of songs from the plurality of songs for consumption by the user, using a song from the first list that is most dissimilar with the top-ranked song and an additional third number of songs selected from the plurality of songs,
wherein the third number of songs are similar to the song from the first list that is most dissimilar with the top-ranked song, wherein the third number of songs is an integer greater than one.

7. The method according to claim 6, comprising:
displaying identifying information for at least one song from the third list, while playing back at least one song from the second list.

8. The method according to claim 6 or 7, comprising:
switching playback from the at least one song from the second list to the at least one song from the third list, upon a switching selection by the user.

9. The method according to one of claims 1 to 8, wherein the at least one selection criteria comprises one or more of a most played song, a highest rated song, a recently high rated song, a song that is played most within a determined past period of time, and a song popular among certain age group of listeners.

10. A system for automatic selection of songs for consumption in a music library, the system comprising:
at least one network device comprising a memory and at least one processor, the at least one processor operable to perform the method of one of claims 1 to 9.

11. A machine-readable storage device, having stored thereon a computer program having at least one code section for automatic selection of songs for consumption in a music library, the at least one code section executable by a machine for causing the machine to perform the method of one of claims 1 to 9.
